# EUROPÄISCHE PATENTANMELDUNG

(11) **EP 2 365 199 A2**
(43) Veröffentlichungstag der Anmeldung: **14.09.2011**
(21) Anmeldenummer: 11001265.5
(22) Anmeldetag: 16.02.2011
(51) Int. Cl.: F02C 7/20, F02K 3/06

(54) **Aerodynamisch geformtes Stütz- und/oder Verkleidungselement im Nebenstromkanal eines Gasturbinentriebwerks**

(30) Priorität: 10.03.2010 DE 102010002719
(71) Anmelder: Rolls-Royce Deutschland Ltd & Co KG, 15827 Blankenfelde-Mahlow (DE)
(72) Erfinder: Clemen, Carsten, 15749 Mittenwalde (DE)
(74) Vertreter: Weber, Joachim

(57) **Zusammenfassung**

Ein im Nebenstromkanal eines Gasturbinentriebwerks angeordnetes und sich radial zwischen einer Innen- und einer Außenwand des Nebenstromkanals erstreckendes aerodynamisch geformtes Stütz- und Verkleidungselement (2) umfasst eine Tragkonstruktion (3, 4) aus aerodynamisch geformten, durch einen Verbindungssteg (9) verbundenen Vorderkanten- und Hinterkantenteilen (7 und 8), so dass eine sich beidseitig in Längsrichtung der Tragkonstruktion erstreckende Ausnehmung (10) gebildet ist, in der jeweils eine sich bündig an das Vorder- und Hinterkantenteil (7, 8) anschließende Auskleidungseinlage (11) aus dem gleichen oder einem leichteren Material mit verringerter Schallreflexion oder schallabsorbierender Wirkung und mit aerodynamisch geformter Außenkontur lösbar angebracht ist. In dem Verbindungssteg (9) sind zur Verkleidung von sich im Nebenstromkanal radial erstreckenden Einbauten Hohlräume (14) ausgebildet. Ein derartiges Stütz- und Verkleidungselement hat ein verringertes Gewicht, bewirkt eine reduzierte Geräuschentwicklung und kann einfach gewartet und repariert werden. (Fig. 8).

## Beschreibung

Die Erfindung bezieht sich auf ein aerodynamisch geformtes Stütz- und/oder Verkleidungselement, das im Nebenstromkanal eines Gasturbinentriebwerks angeordnet ist und eine sich radial zwischen einer Innen- und einer Außenwand des Nebenstromkanals erstreckende Tragkonstruktion umfasst.

Bei einem Turbofantriebwerk wird der vom Fan erzeugte Luftstrom durch einen Strömungsteiler in einen Kernluftstrom und einen Nebenluftstrom aufgeteilt. Der Kernluftstrom strömt in einem Kernstromkanal, der von einem den Nebenluftstrom führenden Nebenstromkanal umgeben ist. Die von der Triebwerksverkleidung gebildete Außenwand des Nebenstromkanals ist über sich radial in diesem erstreckende aerodynamisch geformte Stützelemente an der Wand des Kernstromkanals abgestützt. Die als Hohlkörper ausgebildeten Stützelemente können im Innern auch radial im Nebenstromkanal verlaufende Versorgungsleitungen, Antriebswellen oder Halterungen zur Befestigung des Triebwerks am Flugzeugrumpf oder den Tragflächen aufnehmen und fungieren somit gleichzeitig als aerodynamisches Verkleidungselement für diese strömungstechnisch ungünstig ausgebildeten Einbauten. Im Falle der Verkleidung der Triebwerksaufhängung im Nebenstromkanal ist das Verkleidungs-und Stützelement mit dem die Halterung außerhalb des Nebenstromkanals verkleidenden Pylon verbunden. Die Verkleidungs- und Stützelemente haben somit zum einen eine mechanische Funktion und sollen zum anderen aufgrund ihrer aerodynamischen Gestaltung Druckverluste und Vibrationen und damit verbundene akustisch und mechanisch nachteilige Wirkungen sowie negative Einflüsse auf die Triebwerksleistung verringern.

Die Verkleidungs- und Stützelemente sind bekanntermaßen aus zwei Halbschalen, die die Außenwand und die Innenwand des Nebenstromkanals gegeneinander abstützen und die aerodynamische Form definieren und im Innern die zu verkleidenden Bauteile aufnehmen können, gefertigt. Sie bestehen aus einem metallischen Werkstoff oder Kunststoff oder einem Verbundwerkstoff. Darüber hinaus sind auch einstückig ausgebildete Stütz- und/oder Verkleidungselemente bekannt.

Die bekannten Stütz- und/oder Verkleidungselemente sind einerseits wegen ihres hohen Gewichts und des damit verbundenen hohen Treibstoffverbrauchs nachteilig und bei einer Beschädigung muss das gesamte Bauteil bzw. zumindest eine Halbschale ausgetauscht bzw. repariert werden. Zudem ist der durch die Stütz- und Verkleidungselemente erzeugte Geräuschpegel trotz der aerodynamischen Formgebung noch immer sehr hoch.

Der Erfindung liegt die Aufgabe zugrunde, die im Nebenstromkanal eines Gasturbinentriebwerks angeordneten Stütz- und/oder Verkleidungselemente so auszubilden, dass deren Gewicht verringert und deren Reparatur vereinfacht wird und die durch die Stütz- und/oder Verkleidungselemente verursachte Schallemission verringert wird.

Erfindungsgemäß wird die Aufgabe mit einem gemäß den Merkmalen des Patentanspruchs 1 ausgebildeten Stütz-und/oder Verkleidungselement gelöst.

Zweckmäßige Ausgestaltungen der Erfindung sind Gegenstand der Unteransprüche.

Der Grundgedanke der Erfindung besteht darin, dass die als Stützelement und zusätzlich auch als Verkleidungselement fungierende Tragkonstruktion aerodynamisch geformte, durch einen Verbindungssteg verbundene Vorderkanten- und Hinterkantenteile zur Bildung einer sich beidseitig in Längsrichtung der Tragkonstruktion erstreckenden Ausnehmung aufweist, in der eine sich bündig an das Vorder- und Hinterkantenteil anschließende Auskleidungseinlage mit aerodynamisch geformter Außenkontur mithilfe eines Befestigungsmittels lösbar angebracht ist. Bei der gleichzeitigen Nutzung als Verkleidungselement zur aerodynamischen Verkleidung von sich im Nebenstromkanal radial erstreckenden Einbauten sind in dem Verbindungssteg Hohlräume ausgebildet. Aufgrund der mehrteiligen Ausbildung mit separaten Auskleidungseinlagen ist eine einfache und kostengünstige Wartung und Reparatur möglich, da lediglich die Auskleidungseinlagen repariert oder ausgetauscht werden müssen.

Die Auskleidungseinlagen können aus dem gleichen Material wie die Tragkonstruktion oder - gemäß einem weiteren vorteilhaften Merkmal der Erfindung - aus einem gegenüber dem Tragkonstruktionswerkstoff leichteren Material bestehen, das eine verminderte Schallreflexion oder sogar eine schallabsorbierender Wirkung hat, so dass das Gewicht des Triebwerks reduziert und der vom Triebwerk erzeugte Geräuschpegel verringert werden kann.

Gemäß einem weiteren Merkmal der Erfindung ist die Tragkonstruktion zwei- oder mehrteilig ausgebildet und besteht aus miteinander verschraubten Einzelteilen. Die zur Verkleidung von im Nebenstromkanal angeordneten Einbauten vorgesehenen Hohlräume sind durch aneinander grenzende Bereiche der Einzelteile eingeformte Ausnehmungen gebildet. Dadurch kann ein Stützelement mit gleichzeitiger Verkleidungsfunktion bereitgestellt werden, dass auf einfache Art hergestellt, montiert bzw. demontiert und repariert werden kann.

In weiterer Ausbildung der Erfindung weisen die Auskleidungselemente zur Schallabsorption eine akustische Wabenstruktur auf, die eine hohe Schallabsorption und eine geringe Geräuschentwicklung gewährleistet..

In weiterer Ausgestaltung der Erfindung kann das Hinterkantenteil oder ein stattdessen vorgesehener Pylon an der Stirnseite des Verbindungssteges verschraubt sein.

In zweckmäßiger Ausgestaltung der Erfindung erfolgt die Verbindung der Einzelteile der Tragkonstruktion untereinander oder deren Verbindung mit einem Pylon mittels an der Außenfläche bündig abschließender oder versenkter Schraubverbindungen. Als Befestigungsmittel zur Anbringung der Auskleidungseinlagen sind Senkkopf- oder versenkte Inbusschrauben vorgesehen. Vorzugsweise kann als Befestigungsmittel zum Anbringen der Auskleidungseinlagen eine aus einer Steckaufnahme und einer Einstecklasche bestehende Steckverbindung vorgesehen sein.

Die Auskleidungseinlagen können jeweils einteilig oder auch zwei- oder mehrteilig ausgebildet sein.

Ausführungsbeispiele der Erfindung werden anhand der Zeichnung näher erläutert. In der Zeichnung zeigen:
- Fig. 1: eine Schnittansicht einer einstückig ausgebildeten Tragkonstruktion für ein im Nebenstromkanal angeordnetes Stützelement, jedoch ohne Auskleidungseinlagen;
- Fig. 2: eine Schnittansicht einer zweiteilig ausgebildeten, durch eine Verschraubung verbundenen Tragkonstruktion eines Stützelements;
- Fig. 3: eine Schnittansicht einer dreiteiligen Tragkonstruktion für ein Stützelement;
- Fig. 4: eine Schnittansicht einer dreiteiligen Tragkonstruktion mit Hohlräumen zur Aufnahme und aerodynamischen Verkleidung von sich radial im Nebenstromkanal erstreckenden Einbauten;
- Fig. 5: eine Schnittansicht einer Tragkonstruktion mit einem an dessen Hinterkante verschraubtem Pylon;
- Fig. 6: ein vollständig ausgebildetes Stützelemente mit in seitlichen Ausnehmungen angebrachten Ausklei― dungseinlagen;
- Fig. 7: ein eine zweiteilige Tragkonstruktion mit seitlichen Auskleidungseinlagen umfassendes, mit einem Pylon verschraubtes Stützelement;
- Fig. 8: ein gleichzeitig als Verkleidungselement für im Nebenstromkanal angeordnete Einbauten vorgesehenes Stützelement mit seitlich angeordneten Auskleidungseinlagen; und
- Fig. 9: eine schematische Darstellung einer Steckverbindung zur aerodynamisch vorteilhaften Montage der Auskleidungseinlagen an der Tragkonstruktion.

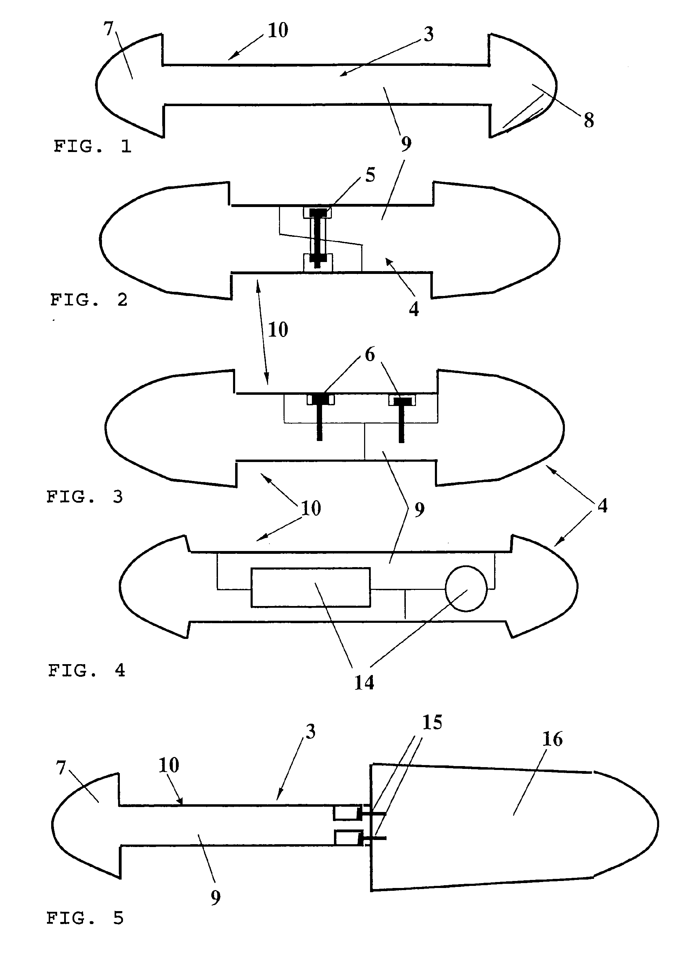

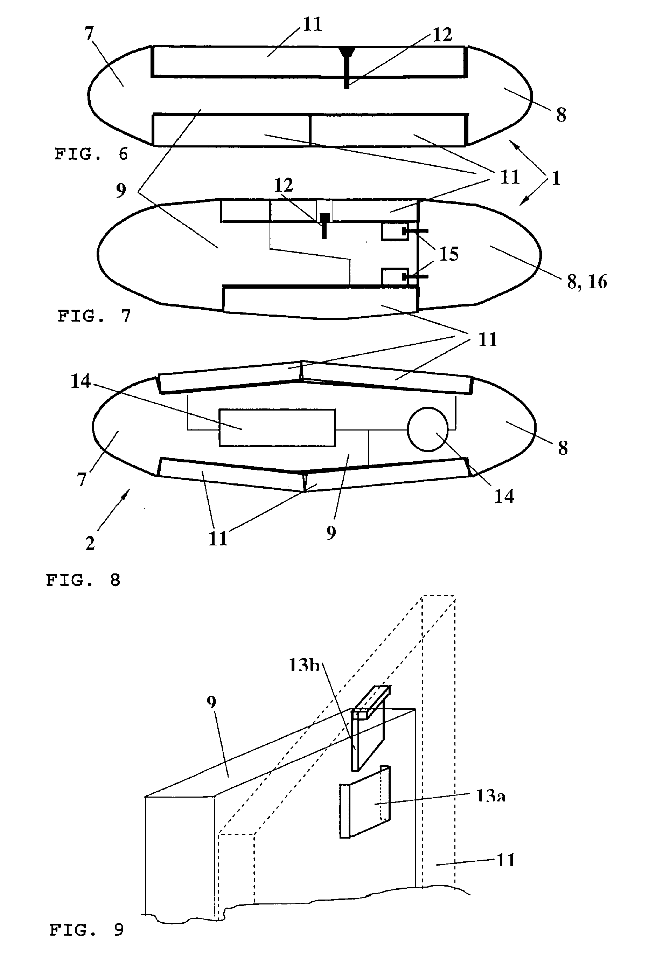

In den Figuren 6 bis 8 sind Stützelemente 1 und Stütz-und Verkleidungselemente 2 dargestellt, die zwischen der Innen- und der Außenwand des Nebenstromkanals eines Gasturbinentriebwerks (nicht dargestellt) angeordnet werden und entweder nur eine Stützfunktion (Fig. 6 und 7) oder zusätzlich auch eine Verkleidungsfunktion für im Nebenstromkanal in radialer Richtung verlaufende Einbauten wie Versorgungsleitungen oder dergleichen haben. Die Stützelemente 1 oder Stütz- und Verkleidungselemente 2 umfassen eine einstückig ausgebildete Tragkonstruktion 3 (Fig. 1 und 6) oder eine zwei- oder mehrteilige Tragkonstruktion 4, deren Einzelteile 4a, 4b, 4c durch eine Schraubverbindung 5, 6 derart aneinander gefügt sind, dass deren Schraubenköpfe und Schraubenbolzen nicht über die Außenfläche der Tragkonstruktion 4 hinaus ragen. Die einteilige und die mindestens zweiteilige Tragkonstruktion 3, 4 umfassen einen aerodynamisch geformten Vörderkantenteil 7 und einen aerodynamisch geformten Hinterkantenteil 8 sowie einen zwischen diesen ausgebildeten Verbindungssteg 9. Die Dicke des Verbindungssteges 9 ist kleiner als die maximale Breite des Vorderkanten- und des Hinterkantenteils 7, 8, so dass an den Seitenflächen der Tragkonstruktion 3, 4 eine in deren Längsrichtung verlaufende, im Wesentlichen rechteckig ausgebildete Ausnehmung 10 gebildet ist. In diesen Ausnehmungen 10 sind aerodynamisch geformte, bündig an den Vorderkantenteil 7 und den Hinterkantenteil 8 (oder ein Pylon 15) anschließende Auskleidungseinlagen 11 mit einem Befestigungsmittel 12 oder 13 angebracht. Als Befestigungsmittel 12 dienen Inbus-oder Senkkopfschrauben 12, die nicht über die Außenfläche der Auskleidungseinlagen 11 hinaus ragen, oder eine aus einer Steckaufnahme 13a und einer Einstecklasche 13b bestehende Steckverbindung 13.

Die Außenfläche der Auskleidungseinlage 11 ist - angepasst an die Ausbildung des Stützelements 1 bzw. des Stütz- und Verkleidungselements 2 und die jeweiligen Strömungsverhältnisse - individuell so geformt, dass dort günstige Strömungsbedingungen herrschen und möglichst geringe Druckverluste und Vibrationen auftreten.

Die Auskleidungseinlagen 11 können aus dem gleichen Material wie die Tragkonstruktion 3 oder 4 bestehen. Aufgrund der aus der Tragkonstruktion 3, 4 und den Auskleidungseinlagen 11 bestehenden mehrteiligen Ausbildung ergibt sich bereits der Vorteil einer einfachen Reparatur und Wartung der Stützelemente 1 bzw. der Stütz- und Verkleidungselemente 2. Die Auskleidungseinlagen 11 zeichnen sich aber infolge der möglichen Verwendung eines von dem für die Tragkonstruktion 3, 4 eingesetzten Material abweichenden Werkstoffs insbesondere durch ein geringeres Gewicht sowie die Schallwellen in vermindertem Umfang reflektierende oder die Schallwellen absorbierende Eigenschaften aus. Das heißt, das für die Auskleidungseinlagen 11 verwendete Material kann leichter und weniger hart sein, um das Gesamtgewicht und die Schallreflexion an den Außenflächen zu reduzieren, oder die Auskleidungseinlagen 11 können eine die Schallwellen absorbierende akustische Wabenstruktur aufweisen, um den im Nebenstromkanal erzeugten Geräuschpegel noch weiter zu senken.

Wie die Figuren 4 und 8 zeigen, unterscheidet sich das Stütz- und Verkleidungselement 2 von dem keine Verkleidungsfunktion besitzenden reinen Stützelement 1 im Wesentlichen dadurch, dass in die aneinander grenzenden Innenflächen der Tragkonstruktions-Einzelteile 4a, 4b, 4c einander gegenüberliegende Ausnehmungen zur Schaffung von Hohlräumen 14 für die Aufnahme von im Nebenstromkanal angeordneten, aerodynamisch zu verkleidenden Einbauten (zum Beispiel Versorgungsleitungen) eingeformt sind.

Aus den Figuren 5 und 7 ist weiterhin ersichtlich, dass bei einer einstückigen oder mehrteiligen Tragkonstruktion 3 bzw. 4 an dem Verbindungssteg 9 anstelle des Hinterkantenteils 8 auch ein mittels einer Schraubverbindung 15 befestigtes Pylon 16 angebracht sein kann.

### Bezugszeichenliste

- 1: Stützelement
- 2: Stütz- und Verkleidungselement
- 3: einstückige Tragkonstruktion
- 4: zwei- oder mehrteilige Tragkonstruktion
- 4a-4c: Einzelteile von 4
- 5: Schraubverbindung
- 6: Schraubverbindung
- 7: Vorderkantenteil
- 8: Hinterkantenteil
- 9: Verbindungssteg
- 10: Ausnehmung in 3, 4
- 11: Auskleidungseinlage
- 12: Befestigungsmittel für Auskleidungseinlage
- 13: Steckverbindung für Auskleidungseinlage
- 13a: Steckaufnahme
- 13b: Einstecklasche
- 14: Hohlraum in 9
- 15: Schraubverbindung für 16
- 16: Pylon

## Patentansprüche

1. Aerodynamisch geformtes Stütz- und/oder Verkleidungselement, das im Nebenstromkanal eines Gasturbinentriebwerks angeordnet ist und eine sich radial zwischen einer Innen- und einer Außenwand des Nebenstromkanals erstreckende Tragkonstruktion umfasst, **dadurch gekennzeichnet, dass** die Tragkonstruktion (3, 4) aerodynamisch geformte, durch einen Verbindungssteg (9) verbundene Vorderkanten- und Hinterkantenteile (7 und 8) zur Bildung einer sich beidseitig in Längsrichtung der Tragkonstruktion erstreckenden Ausnehmung (10) aufweist, in der eine sich bündig an das Vorder- und Hinterkantenteil (7, 8) anschließende Auskleidungseinlage (11) mit aerodynamisch geformter Außenkontur mithilfe eines Befestigungsmittels (12, 13a, 13b) lösbar angebracht ist, wobei in dem Verbindungssteg (9) zur Verkleidung von sich im Nebenstromkanal radial erstreckenden Einbauten Hohlräume (14) ausgebildet sind.

2. Stütz- und/oder Verkleidungselement nach Anspruch 1, **dadurch gekennzeichnet, dass** die Tragkonstruktion (4) zwei- oder mehrteilig ausgebildet ist und aus miteinander verschraubten Einzelteilen (4a, 4b, 4c) besteht.

3. Stütz- und/oder Verkleidungselement nach Anspruch 1 oder 2, **dadurch gekennzeichnet, dass** die Hohlräume (14) durch in aneinander grenzende Bereiche der Einzelteile (4a, 4b, 4c) eingeformte Ausnehmungen gebildet sind.

4. Stütz- und/oder Verkleidungselement nach Anspruch 1, **dadurch gekennzeichnet, dass** die Auskleidungseinlagen (11) aus einem gegenüber dem Tragkonstruktionswerkstoff leichteren Material mit verminderter Schallreflexion oder mit schallabsorbierender Wirkung bestehen.

5. Stütz- und/oder Verkleidungselement nach Anspruch 4, **dadurch gekennzeichnet, dass** die Auskleidungselemente (11) zur Schallabsorption eine akustische Wabenstruktur aufweisen.

6. Stütz- und/oder Verkleidungselement nach Anspruch 1, **dadurch gekennzeichnet, dass** das Hinterkantenteil (8) oder ein stattdessen vorgesehener Pylon (16) an der Stirnseite des Verbindungssteges (9) verschraubt ist.

7. Stütz- und/oder Verkleidungselement nach Anspruch 2 oder 6, **dadurch gekennzeichnet, dass** die Verbindung der Einzelteile (4a, 4b, 4c) untereinander oder deren Verbindung mit einem Pylon (16) mittels an der Außenfläche bündig abschließender oder versenkter Schraubverbindungen (5, 6, 15) erfolgt.

8. Stütz- und/oder Verkleidungselement nach Anspruch 1, **dadurch gekennzeichnet, dass** als Befestigungsmittel zur Anbringung der Auskleidungseinlagen (11) Senkkopf- oder versenkte Inbusschrauben (12) vorgesehen sind.

9. Stütz- und/oder Verkleidungselement nach Anspruch 1, **dadurch gekennzeichnet, dass** als Befestigungsmittel zum Anbringen der Auskleidungseinlagen (11) eine aus einer Steckaufnahme (13a) und einer Einstecklasche (13b) bestehende Steckverbindung (13) vorgesehen ist.

10. Stütz- und/oder Verkleidungselement nach Anspruch 1, **dadurch gekennzeichnet, dass** die Auskleidungseinlagen (11) zwei- oder mehrteilig ausgebildet sind.
